# FASCICULE DE BREVET EUROPEEN

(11) **EP 1 352 272 B1**
(45) Date de publication et mention de la délivrance du brevet: **07.03.2007**
(21) Numéro de dépôt: 01997711.5
(22) Date de dépôt: 15.11.2001
(51) Int. Cl.: G02B 6/122, G02B 5/20, G02F 1/295, G02F 1/01, G11B 7/135

(54) **DISPOSITIF DE COMMUTATION OPTIQUE COMPRENANT DES GUIDES D'ONDE DONT LES DEUX PLUS PETITES DIMENSIONS SONT INFERIEURES AUX LONGUEURS D'ONDE GUIDEES**
SCHALTUNGSVORRICHTUNG MIT WELLENLEITERN, DEREN ZWEI KLEINSTE DIMENSIONEN KLEINER ALS DIE GELEITETEN WELLENLÄNGEN SIND
OPTICAL SWITCHING DEVICE COMPRISING TWO WAVEGUIDES WHEREOF BOTH SMALLEST DIMENSIONS ARE LESS THAN THE GUIDED WAVELENGTHS

(30) Priorité: 24.11.2000 FR 0015228
(43) Date de publication de la demande: 15.10.2003
(73) Titulaire: Thomson Licensing, 92100 Boulogne-Billancourt (FR)
(72) Inventeur: RICHARD, Nicolas, F-21000 Dijon (FR)
(74) Mandataire: Browaeys, Jean-Philippe
(86) Numéro de dépôt international: PCT/FR2001/003576
(87) Numéro de publication internationale: WO 2002/042812

(56) Documents cités:
- EP-A- 1 026 675
- EP-A- 1 128 372
- DICKSON R M ET AL: "UNIDIRECTIONAL PLASMON PROPAGATION IN METALLIC NANOWIRES" JOURNAL OF PHYSICAL CHEMISTRY. B, MATERIALS, SURFACES, INTERFACES AND BIOPHYSICAL, WASHINGTON, DC, US, vol. 104, no. 26, 2000, pages 6095-6098, XP000955253 ISSN: 1089-5647
- DITLBACHER H ET AL: "SPECTRALLY CODED OPTICAL DATA STORAGE BY METAL NANOPARTICLES" OPTICS LETTERS, OPTICAL SOCIETY OF AMERICA, WASHINGTON, US, vol. 25, no. 8, 15 avril 2000 (2000-04-15), pages 563-565, XP000951945 ISSN: 0146-9592
- WEEBER J ET AL: "PLASMON POLARITONS OF METALLIC NONOWIRES FOR CONTROLLING SUBMICRON PROPAGATION OF LIGHT" PHYSICAL REVIEW, B. CONDENSED MATTER, AMERICAN INSTITUTE OF PHYSICS. NEW YORK, US, vol. 60, no. 12, 15 septembre 1999 (1999-09-15), pages 9061-9068, XP000960372 ISSN: 0163-1829 cité dans la demande
- TAKAHARA J ET AL: "GUIDING OF A ONE-DIMENSIONAL OPTICAL BEAM WITH NANOMETER DIAMETER" OPTICS LETTERS, OPTICAL SOCIETY OF AMERICA, WASHINGTON, US, vol. 22, no. 7, 1 avril 1997 (1997-04-01), pages 475-477, XP000690674 ISSN: 0146-9592

## Description

L'invention concerne l'utilisation de guides de rayonnement dont les deux plus petites dimensions sont inférieures aux longueurs d'onde de ce rayonnement, et qui, pourtant, parviennent à guider ce rayonnement grâce à des phénomènes de résonance de « plasmons ».

L'article intitulé "Unidirectional Plasmon Propagation in Metallic Nanowires", publié dans la revue "Journal of Physical Chemistry B", vol. 104, pages 6095-6098, écrit par R. M. Dickson et al., décrit les propriétés de propagation de plasmons excités par différentes longueurs d'onde dans des guides plasmons, chaque guide étant constitué d'un matériau différent.

L'article intitulé « Plasmon polaritons of metallic nanowires for controlling submicron propagation of light », publié le 15 septembre 1999 dans la revue « Physical Review B », vol. 60, N°12, p.9061-9068, écrit par Jean-Claude WEBER et al., décrit les principes de transport sélectif d'énergie électromagnétique à l'aide de « nanoguides » métalliques déposés sur un substrat diélectrique.

Ces particules métalliques allongées sont par exemple déposées sur le substrat diélectrique à l'aide de méthodes cathodo-lithographiques.

Cet article donne des exemples qui illustrent ces principes, basés sur l'utilisation, comme « nanoguides », de parallélépipèdes allongés dont les deux plus petites dimensions, à savoir l'épaisseur h et la largeur e, sont inférieures à la longueur d'onde du rayonnement à propager sélectivement en leur sein :
- en illuminant l'extrémité d'un « nanoguide » en or de dimensions 1500 nm x 30 nm x 15 nm, l'intensité lumineuse normalisée détectée à l'autre extrémité est maximum (40%) pour la longueur d'onde 835 nm, minimum et nulle pour la longueur d'onde 633 nm,
- en illuminant l'extrémité d'un « nanoguide » également en or de dimensions 1000 nm x 30 nm x 20 nm, l'intensité lumineuse normalisée détectée à l'autre extrémité est maximum pour une longueur d'onde différente, à savoir 770 nm.

Comme le maximum de transmission de ces « nanoguides » dépend de la longueur d'onde à transmettre, on parle de transport sélectif d'énergie électromagnétique ou de guide à sélectivité spectrale ; le moyen utilisé ici pour obtenir cette sélectivité repose sur la différence de dimensions, notamment les deux plus petites dimensions, des nanoguides qui sont, ici, réalisés dans la même matière.

Ce document décrit l'exemple suivant représenté à la figure 9 :
- deux « nanoguides » identiques d'une longueur de 1 µm sont réalisés à l'aide du même matériau, déposés sur une surface diélectrique et disposés parallèlement à une distance de 0,2 µm environ, de manière à pouvoir exciter simultanément deux extrémités voisines de ces nanoguides à l'aide d'un même faisceau ; ces extrémités d'excitation sont appelées extrémités d'entrée.
- à l'autre extrémité de chaque « nanoguide », on dépose une « nanoparticule » d'or : l'une de dimensions 20 nm x 30 nm x 100 nm, l'autre de dimensions 30 nm x 30 nm x 100 nm.
- on illumine simultanément les extrémités d'entrée des nanoguides et on constate que, selon la longueur d'onde d'illumination, l'une ou l'autre des nanoparticules diffuse un rayonnement.

Ainsi, ce document enseigne qu'un système comprenant deux nanoguides disposés autour d'un même point d'illumination ou zone d'entrée et se terminant par des nanoparticules de tailles différentes permet d'exciter une particule proche de l'un ou l'autre des nanoguides selon la longueur d'onde du rayonnement utilisé.

Le moyen utilisé ici pour l'excitation de la particule repose sur la différence de taille de celle-ci.

Mais la réalisation d'un tel système reste onéreuse, notamment parce qu'il impose le dépôt de nanoparticules à l'extrémité des nanoguides et d'une excitation d'une seule et unique particule, mais aussi parce qu'il impose de déposer des éléments de tailles différentes sur le substrat diélectrique.

L'invention a pour but d'éviter cet inconvénient.

A cet effet, l'invention a pour objet un dispositif de commutation optique d'un rayonnement suivant la revendication 1.

L'invention peut également présenter une ou plusieurs des caractéristiques suivantes :
- ledit matériau est choisi dans le groupe comprenant l'or, l'argent, l'aluminium, le cuivre, l'oxyde mixte d'indium et d'étain.
- la nature du matériau des guides et les dimensions des guides sont adaptées pour obtenir en leur sein une résonance de plasma d'électrons pour au moins une longueur d'onde possible dudit rayonnement à commuter.

La longueur d'onde d'excitation de la résonance correspond en général à une gamme assez large de longueurs d'onde centrée sur un pic où la résonance est maximum ; de préférence, les longueurs d'onde de résonance desdits guides sont toutes comprises entre 350 nm et 1100 nm.
- les guides déposés sur la même surface ont approximativement les mêmes dimensions.

On s'interdit alors d'utiliser les dimensions comme moyen de sélectivité ou comme moyen de commutation comme dans l'art antérieur ; grâce à cette caractéristique additionnelle, les guides de natures différentes mais de même taille peuvent être déposés de façon plus économique en utilisant le même procédé selon les mêmes réglages ; ainsi, la commutation optique du rayonnement est alors réalisée à l'aide de guides identiques en taille mais différents en nature, ce qui permet de fabriquer un dispositif de commutation optique de manière économique.

Par dimensions approximativement identiques, on entend les dimensions de guides auxquelles on parvient en utilisant le même procédé de dépôt selon les mêmes réglages ; de préférence, lesdites deux plus petites dimensions des guides sont inférieures ou égales à 100 nm ; typiquement, les deux plus petites dimensions des guides sont de l'ordre de 40 nm.

L'invention a également pour objet un système optique comprenant une entrée et plusieurs sorties, caractérisé en ce qu'il comprend un dispositif de commutation optique selon l'invention, l'entrée du système étant adaptée pour illuminer simultanément toutes les extrémités d'entrée desdits guides, et chacune des extrémités de sortie desdits guides étant connectée à une sortie du système.

L'invention s'applique tout particulièrement à un dispositif de lecture optique selon au moins deux longueurs d'onde différentes de données numériques stockées sur un support, comme un disque optique, et comportant, pour la lecture selon les longueurs d'onde différentes, un dispositif de commutation optique desdites différentes longueurs d'onde.

Certains disques optiques de stockage de données numériques comportent différentes couches d'enregistrement qui peuvent être lues simultanément à condition d'employer des faisceaux Laser de lecture de longueurs d'onde différentes, adaptées chacune à une couche d'enregistrement.

Sur d'autres disques optiques de stockage de données numériques, les données sont accessibles par luminescence et nécessitent également un dispositif de lecture optique selon des longueurs d'onde différentes.

D'autres disques optiques, comme par exemples ceux où les données sont stockées sous la forme de « plasmons », nécessitent des dispositifs de lecture selon au moins deux longueurs d'onde différentes.

Les dispositifs de lecture optique de tels supports de données comportent donc des moyens pour commuter les différentes longueurs d'onde de lecture ou de luminescence ; avantageusement on utilise à cet effet un dispositif de commutation optique du rayonnement de lecture des données comprenant une surface dotée de guides de rayonnement présentant chacun une forme allongée, comprenant chacun une entrée à une extrémité et une sortie à l'autre extrémité, les deux plus petites dimensions de chaque guide étant inférieures aux longueurs d'onde dudit rayonnement, ces guides étant disposés sur la surface de manière à ce que toutes les extrémités d'entrée puissent être éclairées simultanément dans une zone par ledit rayonnement de lecture.

Chaque guide diffère par le matériau qui le constitue.

Un tel dispositif de commutation est très léger et très compact ; il peut donc être très facilement intégré à la tête de lecture du dispositif de lecture.

L'invention concernant le dispositif de commutation sera mieux comprise à la lecture de la description qui va suivre, donnée à titre d'exemple non limitatif, et en référence aux figures annexées sur lesquelles :
- la figure 1 représente un schéma du dispositif selon l'invention : partie supérieure en vue de dessus, partie inférieure en vue latérale ;
- la figure 2 représente l'intensité normalisée diffusée à l'extrémité de sortie des guides du dispositif selon l'invention en fonction de la longueur d'onde.

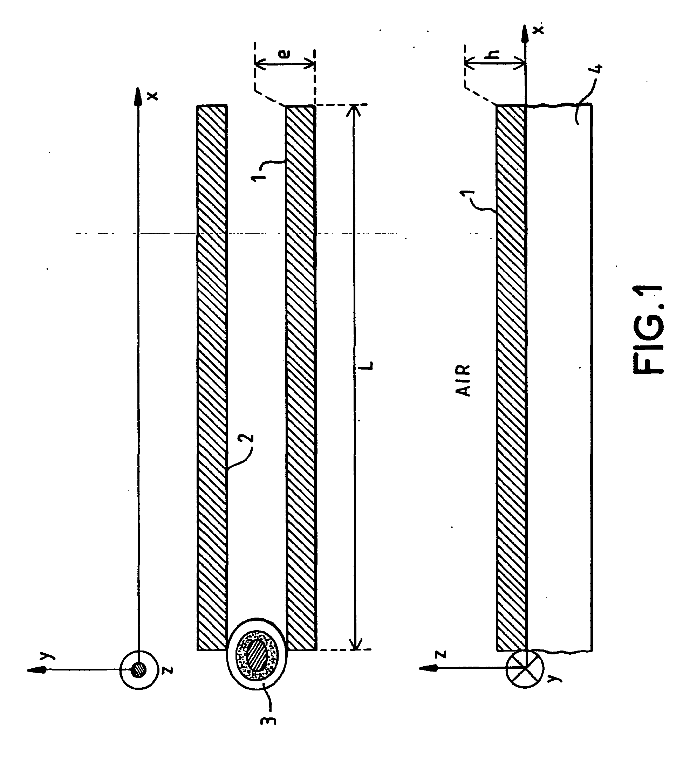

A l'aide de méthodes classiques de cathodo-lithographie, on dépose, sur un substrat 4 de verre d'indice 1,5, des guides 1, 2 de dimensions identiques mais de nature différente; on obtient ainsi le dispositif schématisé sur la figure 1.

Le premier guide 1 est en aluminium, le second 2 est en or ; les dimensions communes des guides sont 2000 nm x 40 nm x 40 nm ; les guides sont disposés parallèlement à une distance de 0,1 µm environ, c'est à dire à une distance suffisamment élevée pour éviter tout effet de couplage direct entre eux mais suffisamment faible pour que l'on puisse exciter simultanément deux extrémités voisines de ces nanoguides à l'aide d'un même faisceau lumineux, ces deux extrémités étant, de ce fait, qualifiées d'entrées et les autres extrémités qualifiées de sorties.

On va maintenant montrer comment le dispositif ainsi obtenu peut être utilisé comme moyen de commutation optique.

Comme représenté sur la figure 1, on fait converger le faisceau du rayonnement à commuter sur une zone 3 d'entrée chevauchant les extrémités d'entrées des deux guides.

Ce rayonnement incident peut être focalisé à travers le substrat de verre par un dispositif optique adapté, comme par exemple un objectif à immersion ; comme indice de réfraction de l'huile d'immersion de cet objectif, on peut choisir une valeur proche de 1,5 ; comme ouverture optique de cet objectif, on peut choisir une valeur proche de 0,9.

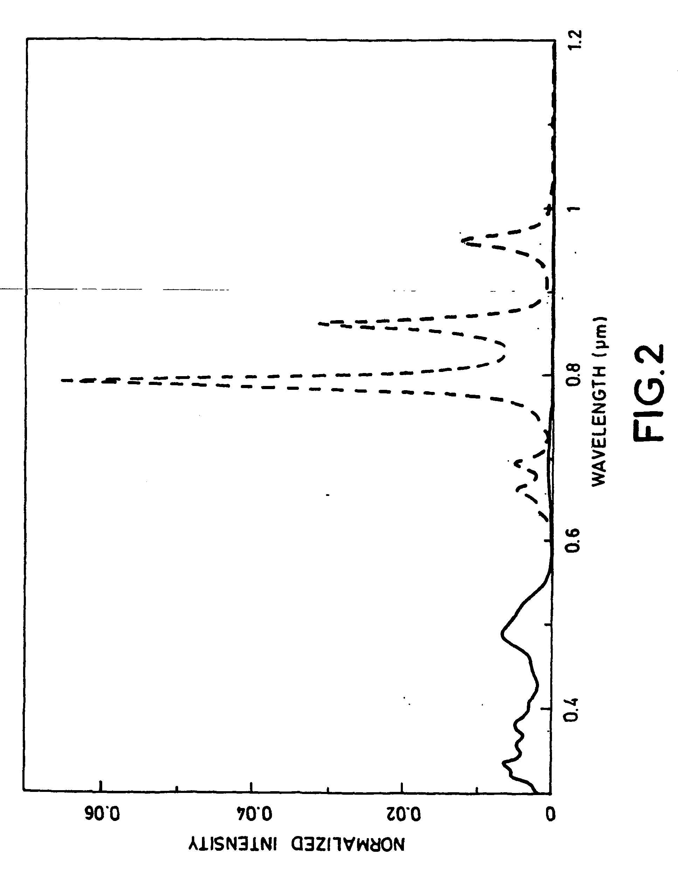

A l'aide de moyens de calcul adaptés connus en eux-mêmes, on évalue l'intensité diffusée à l'extrémité de sortie des guides dans les conditions d'excitation énoncées ci-dessus ; les résultats ont été évalués à une distance de l'ordre de 30 nm au-dessus de la surface supérieure de l'extrémité de sortie des guides ; les résultats obtenus sont normalisés en fonction de la lumière incidente et sont reportés à la figure 2 : ligne continue pour le guide en aluminium, ligne discontinue pour le guide en or; les pics de ces figures correspondent aux longueurs d'onde susceptibles d'exciter la résonance de plasma d'électrons au sein du guide correspondant ; par exemple, on observe une résonance maximum à 489 nm au sein du guide en aluminium, et à 790 nm au sein du guide en or.

Si on observe dans ces conditions d'excitation la distribution spatiale de l'intensité du champ électromagnétique le long des guides :
- sous excitation à 489 nm, on constate que l'onde électromagnétique se propage uniquement dans le guide en aluminium,
- sous excitation à 694 nm, on constate que l'onde électromagnétique se propage simultanément dans les deux guides,
- sous excitation à 790 nm, on constate que l'onde électromagnétique se propage essentiellement uniquement dans le guide en or.

Ainsi, le système ainsi obtenu peut donc bien être utilisé comme moyen de commutation optique.

Selon une variante de l'invention, on dépose sur le substrat de verre plusieurs nanoguides de dimensions identiques mais de matériaux différents, de manière à obtenir plus de deux sorties, l'entrée étant toujours partagée entre les différents nanoguides ; selon cette variante, on dispose par exemple les nanoguides en étoile autour de la zone d'entrée ou d'excitation où converge le faisceau incident ; on choisira d'une manière connue en elle-même ces différents matériaux de manière que les longueurs d'onde de maximum de résonance ne se recouvrent pas.

Le dispositif de commutation optique selon l'invention est plus économique que ceux de l'art antérieur, notamment parce que tous les nanoguides de ce dispositif présentent la même taille et peuvent être réalisés à l'aide du même procédé de dépôt selon les mêmes réglages.

Le dispositif de commutation optique selon l'invention peut être avantageusement intégré à un dispositif de lecture optique de support de stockage de données numériques.

## Revendications

1. Dispositif de commutation optique d'un rayonnement comprenant:
- des moyens d'éclairement émettant ledit rayonnement à commuter,
- une surface dotée de guides de plasmon (1,2) présentant chacun une forme allongée, différant par le matériau qui les constitue et comprenant chacun une entrée à une extrémité et une sortie à l'autre extrémité, les deux plus petites dimensions de chaque guide étant inférieures aux longueurs d'onde dudit rayonnement, et lesdits guides étant disposés à une distance suffisamment élevée pour éviter tout effet de couplage direct entre eux,
le dispositif étant **caractérisé en ce que**
les moyens d'éclairement sont adaptés et les guides sont disposés sur la surface de manière à ce que toutes les extrémités d'entrée des guides soient éclairées simultanément dans une zone (3) par ledit rayonnement à commuter.

2. Dispositif de commutation optique selon la revendication 1 **caractérisé en ce que** ledit matériau est choisi dans le groupe comprenant l'or, l'argent, l'aluminium, le cuivre, l'oxyde mixte d'indium et d'étain.

3. Dispositif de commutation optique selon l'une quelconque des revendications précédentes **caractérisé en ce que** la nature du matériau des guides et les dimensions des guides sont adaptées pour obtenir en leur sein une résonance de plasma d'électrons pour au moins une longueur d'onde possible dudit rayonnement à commuter.

4. Dispositif de commutation optique selon la revendication 3 **caractérisé en ce que** les longueurs d'onde de résonance desdits guides sont toutes comprises entre 350 nm et 1100 nm.

5. Dispositif de commutation optique selon l'une quelconque des revendications précédentes **caractérisé en ce que** les guides déposés sur la même surface ont approximativement les mêmes dimensions.

6. Dispositif de commutation optique selon l'une quelconque des revendications précédentes **caractérisé en ce que** lesdites deux plus petites dimensions des guides sont inférieures ou égales à 100 nm.

7. Système optique comprenant une entrée et plusieurs sorties, **caractérisé en ce qu'**il comprend un dispositif de commutation optique selon l'une quelconque des revendications précédentes, l'entrée du système étant adaptée pour illuminer simultanément toutes les extrémités d'entrée desdits guides, et chacune des extrémités de sortie desdits guides étant connectée à une sortie du système.

8. Dispositif de lecture optique selon au moins deux longueurs d'onde différentes de données numériques stockées sur un support, comme un disque optique, et comportant, pour la lecture selon les longueurs d'onde différentes, un dispositif de commutation optique du rayonnement de lecture des données selon l'une quelconque des revendications 1 à 6, dont les extrémités d'entrée des guides de plasmon peuvent être éclairées simultanément par ledit rayonnement de lecture.

## Claims

1. Optical switching device for switching a radiation, comprising :
- illuminating means that emit said radiation to switch,
- a surface provided with plasmon waveguides (1, 2) each having an elongate shape, differing by the material of which it is made and each comprising an entrance at one end and an exit at the other end, the two smallest dimensions of each waveguide being smaller than the wavelengths of the said radiation, these waveguides being placed at a distance large enough to avoid any direct coupling effect between them, said device being **characterized in that** illuminating means are adapted and waveguides are disposed on the surface so that all the entrance ends of the waveguides are simultaneously illuminated in a region (3) by the said radiation to be switched.

2. Optical switching device according to Claim 1, **characterized in that** the said material is chosen from the group comprising gold, silver, aluminium, copper and mixed indium tin oxide.

3. Optical switching device according to any one of the preceding claims, **characterized in that** the nature of the material of the waveguides and the dimensions of the waveguides are adapted in order to obtain, within the said waveguides, electron plasma resonance for at least one possible wavelength of the said radiation to be switched.

4. Optical switching device according to Claim 3, **characterized in that** the resonance wavelengths of the said waveguides are all between 350 nm and 1 100 nm.

5. Optical switching device according to any one of the preceding claims, **characterized in that** the waveguides deposited on the same surface have approximately the same dimensions.

6. Optical switching device according to any one of the preceding claims, **characterized in that** the said two smallest dimensions of the waveguides do not exceed 100 nm.

7. Optical system comprising one entrance and several exits, **characterized in that** it comprises an optical switching device according to any one of the preceding claims, the entrance of the system being designed to illuminate simultaneously all the entrance ends of the said waveguides, each of the exit ends of the said waveguides being connected to an exit of the system.

8. Device for optically reading, at at least two different wavelengths, digital data stored on a medium, such as an optical disc, and comprising, for reading at the different wavelengths, an optical switching device for switching the data read radiation according to any one of claims 1 to 6, the entrance ends of the plasmon waveguides of which can be simultaneously illuminated by the said read radiation.

## Patentansprüche

1. Vorrichtung zum optischen Schalten einer Strahlung mit:
- Beleuchtungsmitteln, die die zu schaltende Strahlung emittieren,
- einer Fläche, die mit Plasmonleitern (1, 2) versehen ist, die jeweils eine längliche Form aufweisen, sich durch das Material, aus dem sie bestehen, unterscheiden und jeweils einen Eingang an einem Ende und einen Ausgang an dem anderen Ende aufweisen, wobei die zwei kleinsten Abmessungen jedes Leiters geringer sind als die Wellenlängen der Strahlung und die Leiter in einem ausreichend hohen Abstand angeordnet sind, um jeden Effekt einer direkten Kopplung untereinander zu vermeiden,
**dadurch gekennzeichnet, dass**
die Beleuchtungsmittel angepasst und die Leiter auf der Fläche angeordnet sind derart, dass alle Eingangsenden der Leiter in einem Bereich (3) durch die zu schaltende Strahlung gleichzeitig beleuchtet werden.

2. Vorrichtung zum optischen Schalten nach Anspruch 1, **dadurch gekennzeichnet, dass** das Material aus der Gruppe gewählt ist, die Gold, Silber, Aluminium, Kupfer, Mischoxid aus Indium und Zinn umfasst.

3. Vorrichtung zum optischen Schalten nach einem der vorhergehenden Ansprüche, **dadurch gekennzeichnet, dass** die Art des Leitermaterials und die Abmessungen der Leiter angepasst sind, um innerhalb derselben eine Elektronenplasmaresonanz für mindestens eine mögliche Wellenlänge der zu schaltenden Strahlung zu erzielen.

4. Vorrichtung zum optischen Schalten nach Anspruch 3, **dadurch gekennzeichnet, dass** die Resonanzwellenlängen der Leiter alle zwischen 350 nm und 1100 nm liegen.

5. Vorrichtung zum optischen Schalten nach einem der vorhergehenden Ansprüche, **dadurch gekennzeichnet, dass** die auf einer selben Fläche deponierten Leiter annähernd die gleichen Abmessungen haben.

6. Vorrichtung zum optischen Schalten nach einem der vorhergehenden Ansprüche, **dadurch gekennzeichnet, dass** die zwei kleinsten Abmessungen der Leiter kleiner als oder gleich 100 nm sind.

7. Optisches System mit einem Eingang und mehreren Ausgängen, **dadurch gekennzeichnet, dass** es eine Vorrichtung zum optischen Schalten nach einem der vorhergehenden Ansprüche umfasst, wobei der Eingang des Systems angepasst ist, um alle Eingangsenden der Leiter gleichzeitig zu beleuchten, und wobei jedes der Ausgangsenden der Leiter mit einem Ausgang des Systems verbunden ist.

8. Vorrichtung zum optischen Lesen gemäß mindestens zwei unterschiedlichen Wellenlängen von digitalen Daten, die auf einem Träger wie einer optischen Disk gespeichert sind, mit einer Vorrichtung zum optischen Schalten der Strahlung zum Lesen der Daten nach einem der Ansprüche 1 bis 6 zum Lesen gemäß den unterschiedlichen Wellenlängen, bei der die Eingangsenden der Plasmonleiter von der Lesestrahlung gleichzeitig beleuchtet werden können.
